(19) **Europäisches Patentamt / European Patent Office / Office européen des brevets**

(11) **EP 1 845 744 A1**

(12) **EUROPEAN PATENT APPLICATION**

(43) Date of publication:
**17.10.2007 Bulletin 2007/42**

(51) Int Cl.:
***H04Q 7/38*** (2006.01)

(21) Application number: **06112561.3**

(22) Date of filing: **12.04.2006**

| | |
|---|---|
| (84) Designated Contracting States:<br>**AT BE BG CH CY CZ DE DK EE ES FI FR GB GR HU IE IS IT LI LT LU LV MC NL PL PT RO SE SI SK TR**<br>Designated Extension States:<br>**AL BA HR MK YU**<br><br>(71) Applicant: **Nec Technologies (UK) Limited**<br>**Reading, Berkshire RG2 0TD (GB)**<br><br>(72) Inventors:<br>• **Leroy, Arnaud**<br>  **75003 Paris (FR)** | • **Marchand, Pierre**<br>  **92400 Courbevoie (FR)**<br><br>(74) Representative: **Poulin, Gérard**<br>  **BREVALEX**<br>  **3, rue du Docteur Lancereaux**<br>  **75008 Paris (FR)**<br><br><u>Remarks:</u><br>  Amended claims in accordance with Rule 86 (2) EPC. |

(54) **Method and user equipment for optimizing the determination of the number of physical channels and the spreading factors thereof**

(57) The invention relates to a method for determining the number of physical channels to be used in an uplink communication between a UE and a base station in a mobile communication network during a TTI (transport Time Interval) and the spreading factor thereof.

This method comprises the following steps:

a- defining a set of threshold values Vi representative of the UE capability and the network restriction relating to the total number of bits $N_{ej}$ in a TTI,

b- comparing the total number of bits $N_{ej}$ before rate matching to the successive threshold values Vi in ascending order,

c- deducing from said successive comparison steps the number of physical channels and the spreading factor thereof.

FIG. 3

**Description**

**TECHNICAL DOMAIN**

The present invention relates to a method for optimizing the determination of the number of physical channel and the scrambling factors thereof during an E-TFC (Enhanced transport format Combination) selection procedure.

More specifically, the invention concerns a method for determining the number of physical channels to be used in an uplink communication between a UE and a base station in a mobile communication network during a TTI (Transport Time Interval) and the spreading factor of these physical channels.

The invention concerns also a user equipment comprising means for optimizing the number of physical channel and the scrambling factors thereof during an E-TFC (Enhanced transport format Combination) selection procedure.

**STATE OF PRIOR ART**

In a mobile communication network such as UMTS, a UE (User Equipment) is provided with a limited amount of power for transmitting different class of traffic channels during an uplink communication. Each channel transporting different services and/or signaling data which necessitate specific rate and/or QoS (Quality of Service).

At each elementary transmission interval (TTI), the UE selects a TFC (Transport Format Combination) .

The selection of the TFC (Transport Format Combination) to be used in the uplink during each TTI is under the control of the MAC (Medium Access Control) layer of the UE which selects the TFC according to the data available to be sent, the priority of the flows to which the data belongs, the conditions of the radio channel and the UE capability.

Determining the number of physical channels to be used in the uplink during each TTI and the spreading factor of these physical channels is an important step of E-TFC (Enhanced Transport Format Combination) for the E-DCH channel selection/restriction of a Release 6 UMTS mobile.

This procedure has to be performed at each TTI (i.e. every 2 ms in the most constraining case), and for each of the candidate formats (up to 128 possibilities), it is then crucial for the implementation of this procedure to be as optimized as possible.

In the algorithm specified in the 3GPP specification (25.212 §4.8.4.1) there is a single TrCH (Transport Channel) in the CCTrCh (Coded Composite Transport Channel) of E-DCH type, and so the Rate Matching attributes are not used any more.

The algorithm described in this specification (called in the whole sequel the "reference algorithm") implies a lot of arithmetic computations mainly consisting in building a first set of possible results, and on a certain testing condition, building a second set of possible results, and applying a while loop on this set to raise the final decision. Though the reference algorithm is well suited for the DCH channel selection/restriction, it contains operations that increase needlessly the computation time of the E-DCH channel selection/restriction.

One object of the invention is to reduce the time needed for determining the number of physical channels to be used in an uplink communication during each TTI and the spreading factor of these physical channels in order to leave more time for all the other operations within the E-TFC restriction/selection process which has to meet severe real-time constraints.

**PRESENTATION OF THE INVENTION**

The object of the invention is achieved by means of a method for determining the number of physical channels to be used in an uplink communication between a UE and a base station in a mobile communication network during a TTI (transport Time Interval) and the spreading factor of these physical channels, said method comprising the following steps:

a- defining a set of threshold values Vi representative of the UE capability and the network restrictions relating to the total number of bits $N_{ej}$ in a TTI before rate matching for each of the j-th candidate E-TFC (j=0 up to 127),

b- comparing $N_{ej}$ to the successive threshold values Vi in ascending order,

c- deducing from said successive comparison steps the number of physical channels and the spreading factors thereof.

The method according to the invention provides an optimized algorithm involving a considerably reduced number of operations that is typically divided by 20 with regard to the reference algorithm.

In a preferred embodiment of the invention, the threshold values Vi are calculated according to a parameter k depending on the number of transmitted slots in initial transmission TTI (Time Transport Interval), the number $N_{e,data}$ of bits in a non compressed TTI available for the transmission and according to the parameter $PL_{non-max}$, where 1- $PL_{non-max}$ representing the maximum amount of puncturing that can be applied if the number of code channels is less than the maximum allowed by the UE capability and by the restriction imposed by the network.

In this method, the number $N_{e,data}$ of bits in a non compressed TTI available for the transmission is equal to min $\{N_{SF}, N_{category}, N_{maxAllowedUTRANl}\}$ where $N_{SF}$ is the number of available bits per TTI for the spreading factor SF, $N_{category}$ denotes the maximum number of available bits per TTI (for E-DCH) supported by the UE as part of the UE capability and $N_{maxAllowedUTRAN}$ denotes the maximum number of available bits per TTI (for E-DCH) allowed by the UTRAN.

According to another aspect of the invention, the number of available bits per TTI of one E-DPDCH for all spreading factors is an element of $\{N_{256}, N_{128}, N_{64}, N_{32}, N_{16}, N_8, N_4\}$, and the possible number of bits available to the CCTrCH (Coded Composite Transport Channel) of E-DCH type on all physical channels is an element of $\{N_{256}, N_{128}, N_{64}, N_{32}, N_{16}, N_8, N_4, 2*N_4, 2*N_2, 2*N_4 + 2*N_2\}$, the indexes representing the spreading factors.

The invention is implemented in a user equipment for communication in a mobile network comprising:

- means for defining a set of threshold values Vi representative of the UE capability and the network restrictions relating to the total number of bits $N_{ej}$ in a TTI,

- means for comparing the total number of bits $N_{ej}$ before rate matching to the successive threshold values Vi in ascending order,

- means for deducing from said successive comparison steps the number of physical channels and the spreading factors thereof.

## BRIEF DESCRIPTION OF THE FIGURE

The forgoing summary, as well as the following detailed description, will be better understood when read in conjunction with the appended figures in which:

- figure 1 is a flow chart illustrating the main steps of the method according to the invention,
- figure 2 is a flow chart illustrating a pre-computation of the total number $N_{ej}$ of bits in a TTI before rate matching with transport format j,
- figure 3 is a flow chart illustrating an example of implementation of the method according to the invention.

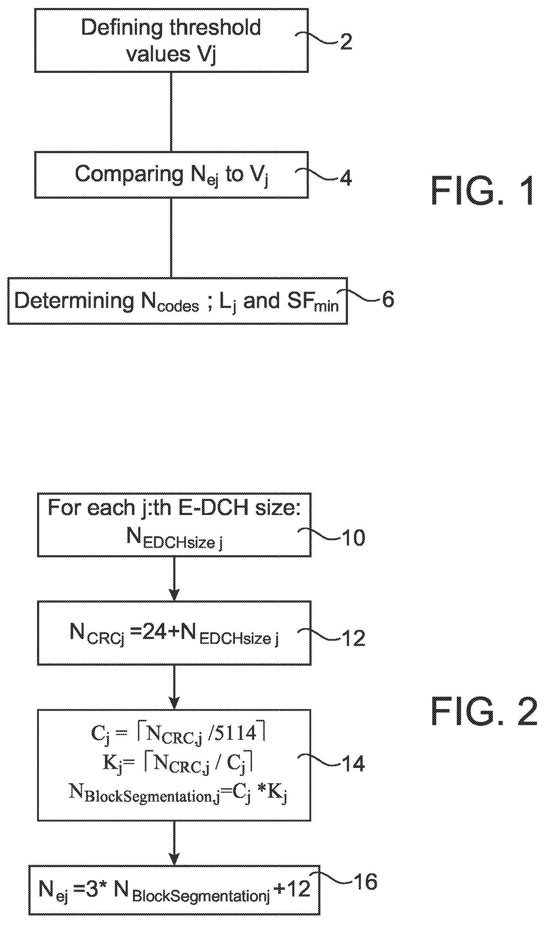

Referring now to figure 1, in step 2, during each TTI (transport Time Interval), a set of N (N$\geq$ 1) threshold values Vi, is defined taking into consideration:

- a parameter k= $n_{tx1}$ /15, where $n_{tx1}$ is the number of transmitted slots in initial transmission TTI,
- the maximum number of available bits per TTI (for E-DCH) supported by the UE as part of the UE capability denoted by a parameter $N_{category}$,
- the maximum number of available bits per TTI (for E-DCH) allowed by the UTRAN denoted by a parameter $N_{maxAllowedUTRAN}$.
- the number of bits in a non compressed TTI available for the transmission with a spreading code equal to SF denoted by $N_{SF}$,
- the parameter $PL_{non-max}$, deduced from 1-$PL_{non-max}$ which represents the maximum amount of puncturing that can be applied if the number of physical channels is less than the maximum allowed by the UE capability and by the restriction imposed by the network.

In step 4, the total number of bits $N_{ej}$ in the TTI before rate matching is compared to the threshold values $V_i$ taken in an ascending order.

In step 6, the number of physical channels to be used in an uplink communication during the TTI and the spreading factors thereof are deduced automatically from the successive results of the comparison steps.

It is to be noted that $N_{ej}$ can be pre-computed, either at the power up of the mobile or hard coded because it does not depend on any parameter sent by RRC (Radio Ressource Control protocol). This well known pre-computation is shown at figure 2.

Referring to figure 2, for each j:th E-DCH, an E-DCH size $N_{E-DCHsizej}$ is defined at step 10.

At step 10, for each $N_{E-DCHsizej}$ a pre-computation of the total number $N_{ej}$ of bits in a TTi before rate matching is processed.

Step 12 consists of calculating $N_{CRCj} = 24 + N_{E^-DCHsizej}$ representing the number of bits of a transport block after appending the CRC (Cyclic Redundancy Check).

Step 14 consists of calculating:

$$\text{Cj} = \lceil N_{CRCj}/5114 \rceil \text{ and } \text{Kj} = \lceil N_{CRCj}/\text{Cj} \rceil$$

where for a value x, $\lceil x \rceil$ is the rounded value towards $\infty$, that is to say the integer such that $x \leq \lceil x \rceil < x+1$), and respectively representing the number of blocks and the number of bits per block after code block segmentation, and $N_{Blocsegmentationj} = $ Cj* Kj. representing the number of bits after code block segmentation.

Finally, the number $N_{ej}$ is calculated in step 16 by the equation:

$$N_{ej} = 3* N_{Blocsegmentationj} + 12$$

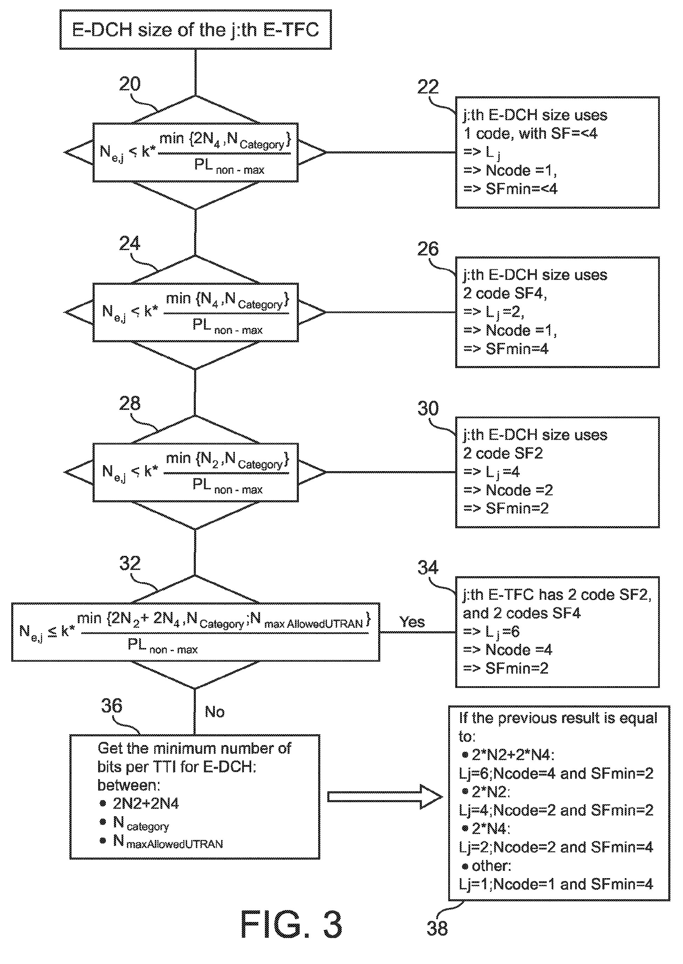

Referring now to figure 3, an example of implementation of the invention is described for determining Lj, the equivalent number of physical channels for SF=4, and the number $N_{codes}$ of physical channels used for E-TFC-MPR (E-TFC Maximum Power Reduction), and an indication on the parameter $SF_{min}$ representing the minimum spreading factor used for E-TFC-MPR determination.

In this example, the set of threshold values comprises four values $V_1$, $V_2$, $V_3$ and $V_4$ are defined as follows:

$$V_1 = k \frac{* \min\{N_{SF4}; N_{category}; N_{\max AllowedUTRAN}\}}{PL_{non-\max}}$$

$$V_2 = k \frac{* \min\{2N_{SF4}; N_{category}; N_{\max AllowedUTRAN}\}}{PL_{non-\max}}$$

$$V_3 = k \frac{* \min\{2N_{SF2}; N_{category}; N_{\max AllowedUTRAN}\}}{PL_{non-\max}}$$

$$V_4 = k \frac{* \min\{2N_{SF2} + 2N_{SF4}; N_{category}; N_{\max AllowedUTRAN}\}}{PL_{non-\max}}$$

As described in the 3GPP release 6 25.212 § 4.8.4.1, SET0 denotes the set of $N_{e,data}$ values allowed by the UTRAN and supported by the UE, as part of the UE's capability.

SET0 can be a subset of $\{N_{64}, N_{32}, N_{16}, N_8, N_4, 2* N_4, 2* N_2, 2* N_4 + 2* N_2\}$,

$$\text{SET1} = \{ N_{e,data} \text{ in SET0 such that } N_{e,data}- N_{e,j}$$

$$\text{is non negative}\},$$

$$\text{SET2} = \{ \; N_{e,data} \text{ in SET0 such that } N_{e,data}- PL_{non\,max} * N_{e,j} \text{ is non negative}\},$$

If SET1 is not empty and the smallest element of SET1 requires just one E-DPDCH (1 code used with SF>=4), this means:

$$K*N_{e,data}-N_{e,j}\geq 0$$

with $N_{e,data}$ element of $\{N_{256}, N_{128}, N_{64}, N_{32}, N_{16}, N_8, N_4\}$.
So it is the case if

$$N_{e,j} \leq k*\min\{N_4; N_{category}; N_{maxAllowedUTRAN}\} \qquad (1)$$

If SET1 is not empty and the smallest element of SET1 requires just one E-DPDCH, that means that only one code is used with SF>=4, so L=1 and Ncode=1.
If SET2 is not empty and the smallest element of SET1 requires more than one E-DPDCH, we can conclude that:

$$K*N_{e,data}- PL_{non-max}*N_{e,j} \geq 0 \qquad (2)$$

and $N_{e,j} > k*\min\{N_4; N_{category}; N_{maxAllowedUTRAN}\}$ (the smallest element of SET1 requires more than one E-DPDCH) with $N_{e,data}$ element of $\{N_{256}, N_{128}, N_{64}, N_{32}, N_{16}, N_8, N_4, 2*N_4, 2*N_2, 2*N_4+2*N_2\}$ and respect of the constraints on Ncategory and $N_{maxAllowedUTRAN}$.
So if SET2 is not empty and the smallest element of SET1 requires more than one E-DPDCH, this means:

$$PL_{non-max}*N_{e,j} \leq k*\min\{N_{2SF4+2SF2}; N_{category}; N_{maxAllowedUTRAN}\}$$

$$\text{(SET2 is not empty)} \qquad (3)$$

and $PL_{non-max}*N_{e,j} > k*\min\{N_4; N_{category}; N_{maxAllowedUTRAN}\}$ (the smallest element of SET1 requires more than one E-DPDCH)
If SET2 is not empty and

- only one code is used, with SF≤4, this means: $k*N_{e,data}-PL_{non-max}*N_{e,j} \geq 0$ with $N_{e,data}$ element of $\{N_{256}, N_{128}, N_{64}, N_{32}, N_{16}, N_8, N_4\}$

$$N_{e,j} \leq \frac{k*\min\{N_{SF4}; N_{category}; N_{\max AllowedUTRAN}\}}{PL_{non-\max}} \qquad (4)$$

- If two codes are used, which are SF=4, this means that:

$$\frac{k*\min\{N_{SF4};N_{category};N_{\max AllowedUTRAN}\}}{PL_{non-\max}} \prec N_{e,j} \le \frac{k*\min\{N_{2SF4};N_{category};N_{\max AllowedUTRAN}\}}{PL_{non-\max}}$$

$$(5)$$

- If two codes are used, which are SF=2, this means that:

$$\frac{k*\min\{N_{2SF4};N_{category};N_{\max AllowedUTRAN}\}}{PL_{non-\max}} \prec N_{e,j} \le \frac{k*\min\{N_{2SF2};N_{category};N_{\max AllowedUTRAN}\}}{PL_{non-\max}}$$

$$(6)$$

- If four codes are used, which are 2SF2+2SF4,it means that:

$$\frac{k*\min\{N_{2SF2};N_{category};N_{\max AllowedUTRAN}\}}{PL_{non-\max}} \prec N_{e,j} \le \frac{k*\min\{N_{2SF2+2SF4};N_{category};N_{\max AllowedUTRAN}\}}{PL_{non-\max}}$$

$$(7)$$

If SET2 and SET1 are empty, the codes used are $\min\{N_{2SF2+2SF4};N_{ategory};N_{maxAllowedUTRAN}\}$

The cases, the smallest element of SET1 requires one E-DPDCH on the one hand and the smallest element of SET1 requires more than one E-DPDCH and SET2 non empty with only one code used on the other hand can be summed up by the following constraint on $N_{e,j}$: $N_{e,j} \le \frac{k * \min\{N_{SF4}; N_{category}\}}{PL_{non-max}}$ since $PL_{non-max}$ is between 0 and 1.

From this analysis, the method according to the invention can be implemented by the algorithm illustrated by figure 3.

In this algorithm the number $N_{ej}$ is first compared to $V_1$ at step 20.

If $N_{ej}$ is lower than $V_1$, then we conclude that:

Lj = 1,
Ncode = 1 and
$SF_{min} \le 4$.

that means that the j:th E-DCH size uses one equivalent number of physical channels assuming SF4, one code and has a spreading factor $SF_{min}$ lower or equal to four (bloc 22).

Else, $N_{ej}$ is compared to $V_2$ at step 24.

If $N_{ej}$ is lower than $V_2$, then we conclude that:

Lj = 2,
Ncode = 2 and
SFmin = 4
that means that the j:th E-DCH size uses two equivalent number of physical channels assuming SF4, two codes, and has a spreading factor $SF_{min}$ equal to 4 (bloc 26) .

Else, $N_{ej}$ is compared to $V_3$ at step 28.

If $N_{ej}$ is lower than $V_3$, then we conclude that:

Lj = 4,

6

Ncode = 2 and
$SF_{min} = 2$

that means that the j:th E-DCH size uses four equivalent number of physical channels assuming SF4, two codes , and has a spreading factor $SF_{min}$ equal to 2 (bloc 30).

Else, $N_{ej}$ is compared to $V_4$.

If $N_{e,j}$ is lower than $V_4$, then we conclude that:

Lj = 6,
Ncode = 4 and
$SF_{min} = 2$

that means that the j:th E-DCH size uses six equivalent number of physical channels assuming SF4, four codes and has a spreading factor $SF_{min}$ equal to 2 (bloc 34) .

Else,the number of bits per TTI for E-DCH is the minimum between:

2N2+2N4

Ncategory

NmaxAllowedUTRAN

Once this number of bits per TTI for E-DCH is get, the Lj, Ncode and SFmin are deduced from the minimum value between 2N2+2N4, Ncategory and NmaxAllowedUTRAN with the following way:

- If the minimum value between 2N2+2N4, Ncategory and NmaxAllowedUTRAN is equal to 2N2+2N4, we conclude that Lj=6, Ncode=4 and SFmin=2

- Else if the minimum value between 2N2+2N4, Ncategory and NmaxAllowedUTRAN is equal to 2N2, we conclude that Lj=4, Ncode=2 and SFmin=2

- Else if the minimum value between 2N2+2N4, Ncategory and NmaxAllowedUTRAN is equal to 2N4, we conclude that Lj=2, Ncode=2 and SFmin=4

- Else we conclude that Lj=1, Ncode=1 and SFmin≤4.

**Claims**

1.  Method for determining the number of physical channels to be used in an uplink communication between a UE and a base station in a mobile communication network during a TTI transport Time Interval and the spreading factor of these physical channels, **characterized by** the following steps:

    a-defining a set of threshold values Vi representative of the UE capability and the network restrictions relating to the total number of bits $N_{ej}$ in a TTI before rate matching for each of the j-th candidate E-TFC (j=0 up to 127),
    b- comparing $N_{ej}$ to the successive threshold values Vi in ascending order,
    c- deducing from said successive comparison steps the number of physical channels and the spreading factors thereof.

2.  Method according to claim 1 wherein, the threshold values Vi are calculated according to a parameter k depending on the number of transmitted slots in initial transmission TTI, the number $N_{e,data}$ of bits in a non compressed TTI available for the transmission, and according to a parameter $PL_{non-max}$, where 1- $PL_{non-max}$ represents the maximum amount of puncturing that can be applied if the number of physical channels is less than the maximum allowed by the UE capability and by the restriction imposed by the network.

3.  Method according to claim 2 wherein, the number $N_{e,data}$ of bits in a non compressed TTI available for the transmission is equal to $min\{N_{SF},N_{category},N_{maxAlloweduTRAN}\}$ where $N_{SF}$ is the number of available bits per TTI for the spreading factor SF, and $N_{category}$ denoting the UE capability, $N_{maxAllowedUTRAN}$ denoting the restriction imposed by the network.

**4.** Method according to claim 3 wherein the number of available bits per TTI of one E-DPDCH for all spreading factors is an element of {$N_{256}$, $N_{1285}$, $N_{64}$, $N_{32}$, $N_{16}$, $N_8$, $N_4$}, and the possible number of bits available to the CCTrCH of E-DCH type on all physical channels is an element of {$N_{256}$, $N_{1285}$, $N_{64}$, $N_{32}$, $N_{16}$, $N_8$, $N_4$, $2* N_4$, $2* N_2$, $2* N_4 + 2* N_2$}, the indexes representing the spreading factors.

**5.** Method according to claim 3 wherein the mobile communication network is a UMTS network.

**6.** User equipment for communication in a mobile network comprising:

- means for defining a set of threshold values Vi representative of the UE capability and the network restrictions relating to the total number of bits $N_{ej}$ in a TTI,
- means for comparing the total number of bits $N_{ej}$ before rate matching to the successive threshold values Vi in ascending order,
- means for deducing from said successive comparison steps the number of physical channels and the spreading factors thereof.

**Amended claims in accordance with Rule 86(2) EPC.**

**1.** Method for determining the number of physical channels to be used in an uplink communication between a UE and a base station in a mobile communication network during a TTI transport Time Interval and the spreading factor of these physical channels, **characterized by** the following steps:

a- defining a set of threshold values Vi representative of the UE capability and the network restrictions relating to the total number of bits $N_{ej}$ in a TTI before rate matching for each of the j-th candidate E-TFC (j=0 up to 127), said values Vi being calculated according to a parameter k depending on the number of transmitted slots in initial transmission TTI, the number $N_{e,data}$ of bits in a non compressed TTI available for the transmission, and according to a parameter $PL_{non-max}$, where 1- $PL_{non-max}$ represents the maximum amount of puncturing that can be applied if the number of physical channels is less than the maximum allowed by the UE capability and by the restriction imposed by the network.

b-comparing $N_{ej}$ to the successive threshold values Vi in ascending order for each of the j-th candidate E-TFC,
c-deducing from said successive comparison steps the number of physical channels and the spreading factors thereof.

**2.** Method according to claim 1 wherein, the number $N_{e,data}$ of bits in a non compressed TTI available for the transmission is equal to min{$N_{SF}$,$N_{category}$,$N_{maxAllowedUTRAN}$ } where $N_{SF}$ is the number of available bits per TTI for the spreading factor SF, and $N_{category}$ denoting the maximum number of available bits per TTI supported by the UE, $N_{maxAllowedUTRAN}$ denoting the maximum number of available bits per TTI allowed by the network.

**3.** Method according to claim 2 wherein the number of available bits per TTI of one E-DPDCH for all spreading factors is an element of {$N_{256}$, $N_{1285}$, $N_{64}$, $N_{32}$, $N_{16}$, $N_8$, $N_4$}, and the possible number of bits available to the CCTrCH of E-DCH type on all physical channels is an element of {$N_{256}$, $N_{1285}$, $N_{64}$, $N_{32}$, $N_{16}$, $N_8$, $N_4$, $2* N_4$, $2* N_2$, $2* N_4 + 2* N_2$}, the indexes representing the spreading factors.

**4.** Method according to claim 2 wherein the mobile communication network is a UMTS network.

**5.** User equipment for communication in a mobile network comprising:

- means for defining a set of threshold values Vi representative of the UE capability and the network restrictions relating to the total number of bits $N_{ej}$ in a TTI, said values Vi being calculated according to a parameter k depending on the number of transmitted slots in initial transmission TTI, the number $N_{e,data}$ of bits in a non compressed TTI available for the transmission, and according to a parameter $PL_{non-max}$, where 1- $PL_{non-max}$ represents the maximum amount of puncturing that can be applied if the number of physical channels is less than the maximum allowed by the UE capability and by the restriction imposed by the network.
- means for comparing the total number of bits $N_{ej}$ before rate matching to the successive threshold values Vi in ascending order for each of the j-th candidate E-TFC,
- means for deducing from said successive comparison steps the number of physical channels and the spreading factors thereof.

## FIG. 1

Defining threshold values Vj ⟞ 2

Comparing $N_{ej}$ to $V_j$ ⟞ 4

Determining $N_{codes}$ ; $L_j$ and $SF_{min}$ ⟞ 6

## FIG. 2

For each j:th E-DCH size: $N_{EDCHsize\ j}$ ⟞ 10

$N_{CRCj} = 24 + N_{EDCHsize\ j}$ ⟞ 12

$C_j = \lceil N_{CRC.j} / 5114 \rceil$
$K_j = \lceil N_{CRC.j} / C_j \rceil$
$N_{BlockSegmentation.j} = C_j * K_j$ ⟞ 14

$N_{ej} = 3 * N_{BlockSegmentationj} + 12$ ⟞ 16

# E-DCH size of the j:th E-TFC

**20**

$N_{e,j} < k* \dfrac{\min\{2N_4, N_{Category}\}}{PL_{non-max}}$

**22**

j:th E-DCH size uses
1 code, with SF=<4
=> L$_j$
=> Ncode =1,
=> SFmin=<4

**24**

$N_{e,j} < k* \dfrac{\min\{N_4, N_{Category}\}}{PL_{non-max}}$

**26**

j:th E-DCH size uses
2 code SF4,
=> L$_j$=2,
=> Ncode =1,
=> SFmin=4

**28**

$N_{e,j} < k* \dfrac{\min\{N_2, N_{Category}\}}{PL_{non-max}}$

**30**

j:th E-DCH size uses
2 code SF2
=> L$_j$=4
=> Ncode =2
=> SFmin=2

**32**

$N_{e,j} \leq k* \dfrac{\min\{2N_2 + 2N_4, N_{Category}, N_{max\,AllowedUTRAN}\}}{PL_{non-max}}$

Yes

**34**

j:th E-TFC has 2 code SF2,
and 2 codes SF4
=> L$_j$=6
=> Ncode =4
=> SFmin=2

**36**

No

Get the minimum number of
bits per TTI for E-DCH:
between:
• 2N2+2N4
• N$_{category}$
• N$_{maxAllowedUTRAN}$

If the previous result is equal
to:
• 2*N2+2*N4:
Lj=6;Ncode=4 and SFmin=2
• 2*N2:
Lj=4;Ncode=2 and SFmin=2
• 2*N4:
Lj=2;Ncode=2 and SFmin=4
• other:
Lj=1;Ncode=1 and SFmin=4

**38**

# FIG. 3

**European Patent Office**

## EUROPEAN SEARCH REPORT

Application Number

EP 06 11 2561

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | "Universal Mobile Telecommunications System (UMTS); Multiplexing and channel coding (FDD) (3GPP TS 25.212 version 6.7.0 Release 6); ETSI TS 125 212" ETSI STANDARDS, EUROPEAN TELECOMMUNICATIONS STANDARDS INSTITUTE, SOPHIA-ANTIPO, FR, vol. 3-R1, no. V670, December 2005 (2005-12), XP014032560 ISSN: 0000-0001 * paragraph [4.8.4.1] * ----- | 1-6 | INV. H04Q7/38 |
| X | EP 1 223 784 A (MITSUBISHI ELECTRIC TELECOM EUROPE) 17 July 2002 (2002-07-17) * paragraphs [0031] - [0042] * ----- | 1-6 | |
| A | EP 1 594 247 A (SAMSUNG ELECTRONICS CO., LTD) 9 November 2005 (2005-11-09) ----- | | |
| | | | **TECHNICAL FIELDS SEARCHED (IPC)** |
| | | | H04L |

The present search report has been drawn up for all claims

| Place of search | Date of completion of the search | Examiner |
|---|---|---|
| The Hague | 21 September 2006 | Schut, Gerhard |

EPO FORM 1503 03.82 (P04C01)

**EP 1 845 744 A1**

## ANNEX TO THE EUROPEAN SEARCH REPORT
## ON EUROPEAN PATENT APPLICATION NO.

EP 06 11 2561

This annex lists the patent family members relating to the patent documents cited in the above-mentioned European search report.
The members are as contained in the European Patent Office EDP file on
The European Patent Office is in no way liable for these particulars which are merely given for the purpose of information.

21-09-2006

| Patent document cited in search report | | Publication date | Patent family member(s) | | Publication date |
|---|---|---|---|---|---|
| EP 1223784 | A | 17-07-2002 | CN 1365201 A | | 21-08-2002 |
| | | | CN 1630220 A | | 22-06-2005 |
| | | | DE 60200008 D1 | | 14-08-2003 |
| | | | DE 60200008 T2 | | 13-05-2004 |
| | | | DE 60202996 D1 | | 24-03-2005 |
| | | | FR 2819365 A1 | | 12-07-2002 |
| | | | JP 3481609 B2 | | 22-12-2003 |
| | | | JP 2002232376 A | | 16-08-2002 |
| | | | US 2002136181 A1 | | 26-09-2002 |
| EP 1594247 | A | 09-11-2005 | US 2005249163 A1 | | 10-11-2005 |

EPO FORM P0459

For more details about this annex : see Official Journal of the European Patent Office, No. 12/82